# EUROPÄISCHE PATENTANMELDUNG

(11) **EP 2 979 594 A1**
(43) Veröffentlichungstag der Anmeldung: **03.02.2016**
(21) Anmeldenummer: 15178470.9
(22) Anmeldetag: 27.07.2015
(51) Int. Cl.: A47J 37/07

(54) **TRAGBARER KOCHER**

(30) Priorität: 28.07.2014 DE 102014214804
(71) Anmelder: LotusGrill GmbH, 67117 Limburgerhof (DE)
(72) Erfinder: Paakkanen, Harri, 69126 Heidelberg (DE); Ohler, Mischa, 67166 Otterstadt (DE)
(74) Vertreter: Patent- und Rechtsanwälte Ullrich & Naumann

(57) **Zusammenfassung**

Ein tragbarer Kocher mit einem Gehäuse (1), einer innerhalb des Gehäuses (1) allseitig mit Abstand zum Gehäuse (1) angeordneten Trägerschale (2), einer in der Trägerschale (2) stehenden, im wesentlichen zylindrischen Holzkohlekammer (20) mit Deckel (24), einem oberhalb der Holzkohlekammer (20) angeordneten Rost und einer Luftversorgungseinrichtung, die von unterhalb der Trägerschale (2) einen in die Holzkohlekammer (20) gerichteten Luftstrom erzeugt, ist dadurch gekennzeichnet, dass das Gehäuse (1) zumindest im Bereich um die Holzkohlekammer (20) herum, mit Abstand zu der Trägerschale (2), als gelochtes Gitter oder als Streckgitter (39) ausgeführt ist.

## Beschreibung

Die Erfindung betrifft einen tragbaren Kocher, mit einem Gehäuse, einer innerhalb des Gehäuses allseitig mit Abstand zum Gehäuse angeordneten Trägerschale, einer in der Trägerschale stehenden, im wesentlichen zylindrischen Holzkohlekammer mit Deckel, einem oberhalb der Holzkohlekammer angeordneten Rost und einer Luftversorgungseinrichtung, die von unterhalb der Trägerschale einen in die Holzkohlekammer gerichteten Luftstrom erzeugt.

Entsprechend den gattungsbildenden Merkmalen handelt es sich um einen tragbaren Kocher, der sich aufgrund seiner besonderen Konstruktion und Ausstattung ganz besonders als Tischkocher, Campingkocher, Kocher für unterwegs, etc. eignet.

Für den Kocher ist wesentlich, dass er innerhalb eines Gehäuses eine Holzkohlekammer für glühende Holzkohle aufweist, wobei die Holzkohlekammer mit einer siebartigen Abdeckung versehen ist. Die Holzkohleschale ist mit einer geschlossenen Wandung ausgestattet und wird über eine zentrische, kegelförmige Aufwölbung und eine darin angeordneten Lochung von unten her mit Verbrennungsluft versorgt. Insoweit ist der Kocher baugleich mit einem aus der EP 1 838 187 B1 bekannten Grill.

Kocher der gattungsbildenden Art, sofern sie aus der Praxis bekannt sind, sind unter der Bezeichnung "Campingkocher" auf dem Markt. Dabei handelt es sich entweder um komplexe bzw. aufwändig gestaltete Vorrichtungen oder aber um Gaskartuschen mit einer Halte-/Stellvorrichtung für Töpfe. Die erstgenannten Kocher sind konstruktiv aufwändig und daher teuer. Die an zweiter Stelle genannten Kocher sind gefährlich in der Handhabung. Es besteht stets die Gefahr des Verbrühens oder des Brandes in der Umgebung durch Umfallen oder unsachgerechte Handhabung der Gaskartusche.

Aus WO 2014/094 745 A1 ist für sich gesehen ein Tischgrill bekannt, bei dem eine als Brennkammer dienende Holzkohlekammer mittig in einer Trägerschale aus Vollmaterial steht. Die Trägerschale ist mit einem zu dieser beabstandeten Gehäuse umgeben, wobei das Gehäuse vertikale Schlitze zur minimalen Belüftung des Raumes zwischen der Trägerschale und dem Gehäuse aufweist. Ein Hitzestau in diesem Bereich ist nicht zu vermeiden.

DE 20 2004 017 817 U1 zeigt eine Vorrichtung zum Garen, die als Brennkammer eine Holzkohlekammer aufweist. Diese steht in einer als Gehäuse dienenden Trägerschale aus Vollmaterial. Während des Betriebs wird die Trägerschale derart heiß, dass die gesamte Vorrichtung äußerst gefährlich ist und sich allenfalls im Freien verwenden lässt.

US 2,575,082 A zeigt einen herkömmlichen Grill für den Außenbereich, bei dem die Brennkammer gelocht ist.

GB 2 168 474 A zeigt für sich gesehen einen im weitesten Sinne als Brennkammer zu bezeichnenden Feuerkorb, der sich modular zusammensetzen lässt. Der Feuerkorb besteht aus Gusseisen und ist ausschließlich für den Außenbereich geeignet.

Im Lichte der voranstehenden Ausführungen liegt der Erfindung die Aufgabe zugrunde, einen einfach konstruierten Kocher anzugeben, der mit Holzkohle beheizbar ist. Er soll einfach in der Konstruktion und sicher in der Handhabung sein. Die im Stand der Technik genannten Nachteile sollen weitestgehend vermieden werden.

Voranstehende Aufgabe ist durch die Merkmale des Patentanspruchs 1 gelöst. Danach ist der gattungsbildende Kocher dadurch gekennzeichnet, dass das Gehäuse zumindest im Bereich um die Holzkohlekammer herum, mit Abstand zu der Trägerschale (2), als gelochtes Gitter oder als Streckgitter ausgeführt ist.

Erfindungsgemäß ist erkannt worden, dass die Verwendung eines gelochten Gitters bzw. eines Lochblechs oder eines Streckgitters geringe Kosten verursacht, zumal es sich bei dem Material um Handelsware handelt. Außerdem ist erkannt worden, dass ein Lochblech oder ein Streckgitter den großen Vorteil mit sich bringt, dass zur Luftzirkulation die Außenluft mühelos in das Innere des Gehäuses treten kann und auch entsprechend wieder durch die Lochung bzw. das Streckgitter als warme Luft heraus gelangt. Ein Hitzestau im Inneren des Gehäuses ist wirksam vermieden.

In vorteilhafter Weise hat das Gehäuse, mit seinem Gitter bzw. Lochblech oder Streckgitter, einen oberen und einen unteren Randbereich, der vorzugsweise aus Vollmaterial die Wandung des Gehäuses stabilisiert bzw. fasst. Auch ist es denkbar, dass das Lochblech bzw. Streckgitter in den unteren Randbereich, der im Sinne einer Aufnahme ausgebildet ist, hineingestellt ist.

In vorteilhafter Weise ist das Gitter aus Edelstahl gefertigt, so dass es eine hinreichend lange Lebensdauer hat.

Das Gehäuse kann abnehmbar auf einem Sockel sitzen, wobei der Sockel zumindest Teile der Luftversorgungseinrichtung umfasst. Entsprechend ist das Gehäuse auf den Sockel aufgesetzt und kann mit diesem, vorzugsweise über den Rost, verspannt werden.

Im Rahmen einer besonders einfachen Ausgestaltung sind das Gehäuse und gegebenenfalls der Sockel zylindrisch ausgeführt und haben vorzugsweise den gleichen Durchmesser. Andere, beispielsweise schalenförmige Ausgestaltungen des Gehäuses, sind denkbar.

Des Weiteren ist es von Vorteil, wenn seitlich des Gehäuses, vorzugsweise einander gegenüberliegend, ein Klammer-/Spannsystem zum Halten und Verspannen des Rosts und gegebenenfalls der Anordnung von Sockel, Gehäuse und Rost vorgesehen ist. Das Spannsystem kann aus Metall, insbesondere aus Edelstahl bestehende Spannbänder umfassen, die sich vom Rost über die Wandung des Gehäuses bis hin zum Sockel erstrecken.

In Bezug auf die Ausgestaltung der Holzkohlekammer ist erkannt worden, dass sich eine zylindrische Ausgestaltung ganz besonders eignet, da diese die Wärme einerseits nach oben und andererseits durch deren Wandung hindurch zur Seite hin gleichzeitig abstrahlt. In besonders vorteilhafter Weise ist die zylindrische Wand der Holzkohlekammer aus einem Edelstahlblech gefertigt, wobei dieses Edelstahlblech, zur Begünstigung der allseitigen Abstrahlung, geschlitzt, gelocht oder gestreckt sein kann.

In vorteilhafter Weise hat die Wand der Holzkohlekammer axial verlaufende, vorzugsweise parallel zueinander ausgebildete Schlitze, die sich zwischen einem durchgehenden bodenseitigen Rand der Kammer und einem durchgehenden deckelseitigen Rand der Kammer erstrecken. Auch ist es denkbar, dass die Schlitze von der axialen Ausrichtung abweichen und beispielsweise unter einem Winkel schräg zur Achse verlaufen. Wesentlich ist jedenfalls, dass die Schlitze gerade so breit ausgelegt sind, dass es zur optimalen Wärmeabstrahlung reicht, wobei sie so schmal sein müssen, dass weder Glut noch Funkenflug durch die Schlitze hindurch nach außen gelangt.

Alternativ ist es denkbar, dass die Wand aus mehreren Wandelementen bzw. Segmenten besteht, die versetzt zueinander angeordnet sind und dabei die Wand der Holzkohlenkammer bilden. Dabei können sich die Wandelemente zumindest geringfügig überlappen, so dass jeweils zwischen den sich überlappenden Wandelementen ein axial verlaufender Schlitz, besser gesagt eine Art Teilringfläche, gebildet ist. Je nach Grad der Überlappung ist dabei wirksam verhindert, dass Glut bzw. Funkenflug nach außen gelangt.

Die Schlitze können je nach Bedarf ausgebildet sein, wobei eine Schlitzbreite im Bereich von 1 mm bis 3mm von Vorteil ist.

Im Rahmen einer weiteren Alternative ist die Wand der Holzkohlekammer als Streckgitter, d.h. aus Streckmetall, gefertigt. Maschenlänge, Maschenbreite und Steckbreite können ebenfalls im Bereich von 1mm bis 3mm liegen. Die Materialstärke kann zwischen 0,1mm und 2mm betragen. Die Verwendung handelsüblicher Streckgitter entsprechend den voranstehenden Ausführungen ist denkbar.

Im Rahmen einer weiteren, zu bevorzugenden Alternative ist die Wand als Lochblech ausgeführt, wobei das Lochblech eine runde, eine ovale bzw. elliptische oder längliche, eine rechteckige, vorzugsweise eine quadratische, oder eine mehreckige, vorzugsweise eine sechseckige Lochung, haben kann. Die Lochung benachbarter Lochreihen kann auf einer horizontalen Linie liegen oder aber versetzt zueinander angeordnet sein.

Die Löcher können bei unterschiedlichster Gestaltung einen Durchmesser bzw. eine Breite im Bereich von 1 mm bis 3mm, vorzugsweise im Bereich von 2mm, haben. Die Schlitze, Lochungen, etc. sind vorzugsweise stanztechnisch hergestellt. Die Wand der Holzkohlekammer ist dabei derart gebogen, dass die durch Stanzen entstandenen Stülpungen nach innen gerichtet sind und dabei kleine Ränder bilden, die abermals den Funkenflug nach außen verhindern.

Der Deckel schließt die Holzkohlekammer nach oben ab. Die Wärmestrahlung nach oben ist ganz besonders dadurch begünstigt, dass der abnehmbare Deckel in seiner Fläche ebenfalls gelocht ist, wobei die Lochung gerade so groß ausgeführt ist, dass Wärmestrahlung ungehindert durch die Lochung hindurchtreten kann, jedoch die Glut im inneren der Holzkohlekammer verbleibt, auch für denn Fall, dass der Kocher unsachgerecht gekippt wird oder sogar umfällt. Insoweit ist zu gewährleisten, dass der abnehmbare Deckel in seiner die Holzkohlkammer schließenden Position, d.h. auf den oberen Rand der Holzkohlekammer aufgesetzt, durch mechanische Mittel fixiert ist.

In vorteilhafter Ausgestaltung hat die Lochung des Deckels vorzugsweise identische Durchgänge, bspw. mit einem Durchmesser im Bereich von 3mm bis 9mm, vorzugsweise mit einem Durchmesser von 6mm. Durch diese Maßnahme kann hinreichend viel Wärmestrahlung nach oben austreten, ist jedoch der ungewollte Austritt von glühenden Bestandteilen der Holzkohle wirksam vermieden, auch für den Fall, dass der gesamte Kocher mit der Holzkohlekammer gekippt wird.

In ganz besonders vorteilhafter Weise umfasst die Lochung mindestens zwei kreisringförmig angeordnete Lochgruppen, wobei die so gebildeten Kreisringe koaxial zueinander angeordnet sein können.

Der Deckel kann mindestens zwei Flächen mit unterschiedlichem axialem Abstand zum Deckelrand aufweisen, wobei den unterschiedlichen Flächen die jeweilige Lochgruppe zugeordnet ist. Entsprechend befindet sich in jeder Ebene des Deckels eine Lochgruppe, wobei die Löcher bzw. Durchgänge äquidistant zueinander ausgebildet sein können.

Im Konkreten kann der Deckel zwischen den Flächen und ggf. an seinem Randbereich nach unten abgewinkelte bzw. geneigte Übergangsflächen aufweisen, entlang derer auf den Deckel tropfendes Wasser oder Fett zur Seite hin nach unten ablaufen kann. Dadurch ist in Bezug auf die zu vermeidende Verbrennung von Fett eine wirksame Barriere geschaffen, wobei weitere Maßnahmen später noch erläutert werden.

Der Deckel ist derart ausgestaltet und dimensioniert, dass er mit seinem Randbereich die Holzkohlekammer in deren oberen Bereich übergreift bzw. umschließt. Es kann sich bei dem Deckel um eine Art Stülpdeckel handeln, wobei der Deckel auf den oberen Randbereich der Holzkohlekammer aufdrückbar oder aufpressbar ist. Auch ein Einrasten wäre bei wulstartiger Ausgestaltung des oberen Randbereichs der Holzkohlekammer und bei entsprechender Ausgestaltung des übergreifenden Randes des Deckels denkbar.

In ganz besonders vorteilhafter Weise umfasst der Deckel einen oberen, vorzugsweise auch als Henkel dienenden Klemmbügel mit einer zumindest gewissen Elastizität, der zum Klemmen und Festlegen der geschlossenen Holzkohlekammer zwischen dem Bodenbereich der Trägerschale und dem Rost dient. Mit anderen Worten wird durch Aufsetzen bzw. Festlegen des Rosts die Holzkohlekammer festgelegt, wobei dem Klemmbügel eine spannende Funktion zukommt. Durch diese Maßnahme ist die Holzkohlekammer im geschlossenen Zustand gesichert, so dass ein unbeabsichtigtes Herausfallen glühender Holzkohle auch dann ausgeschlossen ist, wenn der gesamte Kocher kippt. Ein hohes Maß an Sicherheit ist realisiert.

Zur abermaligen Begünstigung des Wirkungsgrades der als Brennkammer dienenden Holzkohlekammer ist der Boden der Holzkohlekammer gelocht, so dass diese von unten her über eine Anzündhilfe befeuert werden und nach der Befeuerung ziehen kann. Auch diese Lochung kann mindestens zwei kreisringförmig angeordnete Lochgruppen umfassen, ähnlich wie bei dem Deckel. Die so gebildeten Kreisringe sind ebenso koaxial zueinander angeordnet. Aufgrund dieser Maßnahme ist die Holzkohlekammer in idealer Weise auch zum Anfeuern der Holzkohle geeignet, zumal von unterhalb der Holzkohlekammer ein Anzünden mittels Anzündhilfe möglich ist. Jedenfalls dient die Lochung im Bodenbereich der Holzkohlekammer einerseits zum Anzünden der in der Holzkohlekammer befindlichen Holzkohle und andererseits zur Luftversorgung des Innenraums der Holzkohlekammer.

In konstruktiver Hinsicht ist es in Bezug auf die Holzkohlekammer von Vorteil, wenn der Boden gegenüber einem über den Boden hinaus ragenden freien Rand zumindest geringfügig nach innen verlagert ist und wenn der Rand mit einem umlaufenden, nach außen abragenden Flansch, einer Auskragung, etc. endet. Durch diese Maßnahme kommt die Holzkohlekammer nicht etwa mit dem Bodenbereich unmittelbar auf einer Unterlage zum Stehen, steht vielmehr mit dem freien Rand auf der Unterlage, und zwar unter Bildung eines als Anzündraum dienenden Raums zwischen der Unterlage und dem Bodenbereich.

Zur Stabilisierung des die Holzkohlekammer bildenden Körpers ist der untere und/oder der obere Rand der Holzkohlekammer durch Falzen, Börteln, etc. verstärkt. Auch ist es denkbar, dass die Randbereiche einen angeformten, verstärkten Metallrand aufweisen.

Die Wandung der Holzkohlekammer sollte ebenso zur hinreichend guten Abstrahlung von Wärme geeignet sein. Dazu ist die Wandung als umlaufendes, vorzugsweise feinmaschiges Sieb ausgeführt, so dass eine allseitige Wärmeabstrahlung nahezu ungehindert möglich ist. Bei dem Sieb sollte es sich um ein qualitativ hochwertiges Sieb aus Edelstahl handeln, welches für hinreichend langen Gebrauch geeignet ist.

In Bezug auf die Holzkohlekammer sei festgehalten, dass diese in ganz besonders vorteilhafter Weise über eine umlaufende Siebwandung verfügt, wobei der mit der umlaufenden Siebwandung fest verbundene Bodenbereich nach innen in die Holzkohlekammer hinreinragt und nach unten einen Raum definiert. Außerdem ist der Bodenbereich der Holzkohlekammer gelocht, so dass eine darunter angeordnete Anzündhilfe in die Holzkohlekammer hinein wirken kann. Obendrein ist die Luftströmung in die Holzkohlekammer hinein begünstigt.

Ähnlich verhält es sich mit dem Deckel, der zwar die Holzkohlekammer sicher abschließt, jedoch aufgrund der dort vorgesehenen Lochung in idealer Weise eine nahezu freie Wärmeabstrahlung nach oben zulässt. Durch die Summe aller die Holzkohlekammer betreffenden Maßnahmen ist der Wirkungsgrad begünstigt.

Wie bereits zuvor erwähnt, wird die Holzkohlekammer auf eine Unterlage gestellt, wobei es sich dabei in vorteilhafter Weise um eine Anzündschale handelt, auf die die Holzkohlekammer mit ihrem unteren Rand steht. Der Raum zwischen dem Boden der Anzündschale und dem nach innen versetzten Boden der Holzkohlekammer dient zum Beladen mit einer vorzugsweise pastösen Anzündhilfe, die im eingesetzten Zustand der Anzündschale in der Trägerschale entzündet wird. Danach wird die Holzkohlekammer auf bzw. in die Anzündschale gestellt und dort entsprechend der zuvor beschriebenen Klemmung festgelegt.

Zur idealen Positionierung der Anzündschale umfasst diese mindestens drei nach unten abragende Stellfüße, mit denen sie auf dem Boden der Trägerschale steht. Andere Positioniermechanismen sind realisierbar.

Zur Begünstigung bzw. Sicherung einer geeigneten Luftströmung ist im Bodenbereich der Anzündschale, vorzugsweise mittig, ein Lufteinlass zum Einleiten der von der Luftversorgungseinrichtung kommenden Luft vorgesehen. Der Lufteinlass ragt vorzugsweise mittels eines vom Bodenbereich nach oben abragenden Flanschs, Rands oder dgl. in die Anzündschale hinein, so dass von dort aus ein Hineingleiten einer pastösen Anzündhilfe in Richtung der Luftversorgungseinrichtung wirksam verhindert ist.

Das Gehäuse ist in seinem unteren Bereich in vorteilhafter Weise mit einem Innenboden ausgestattet, der in das Gehäuse eingeschweißt sein kann. Die Luftversorgungseinrichtung kann ein Lufteinlassrohr umfassen, welches sich von unterhalb des Innenbodens durch diesen hindurch oder mit diesem integral ausgebildet durch die Trägerschale und durch den Boden der Anzündhilfe hindurch in den Bereich der Anzündhilfe hinein erstreckt. Auf das Lufteinlassrohr kann die Trägerschale und die Anzündschale aufgeschoben bzw. aufgesteckt sein, so dass das Lufteinlassrohr gleichzeitig zur eindeutigen Positionierung der Trägerschale und der Anzündschale dient.

Unterhalb des Innenbodens, nahe des Einlasses des Lufteinlassrohres, kann ein Ventilator bzw. ein Gebläse angeordnet sein. Der Ventilator bläst geregelt Luft in das Lufteinlassrohr, je nach Bedarf bzw. je nach Einstellung.

Bei dem Ventilator handelt es sich um ein miniaturisiertes Aggregat mit äußerst geringem Stromverbrauch, ähnlich oder identisch dem Ventilator im Gehäuse eines Computers. Außerdem arbeitet der Ventilator nahezu geräuschlos.

In ganz besonders vorteilhafter Weise ist eine Regelung für den Betrieb des Ventilators vorgesehen, die den Ventilator bei Erreichen einer vorzugsweise oberhalb des Rosts detektierbaren Betriebstemperatur herunterregelt.

Unterhalb des Innenbodens des Gehäuses kann ein Schalter, ein Regler und ein Batteriefach mit mindestens einer Batterie oder einem Akku zur Stromversorgung für das Gebläse angeordnet sein. Der Schalter und der Regler sitzen in vorteilhafter Weise zur Betätigung von außen in der Gehäusewand. Das Batteriefach ist von außerhalb des Gehäuses zugänglich, vorzugsweise von unterhalb des Gehäuses über eine dort vorgesehene Klappe.

Zur Begünstigung der Luftströmung über die Anzündschale in die Holzkohlekammer hinein weist das Gehäuse im Bereich unterhalb des Innenbodens zur Luftzufuhr dienende Öffnungen, vorzugsweise in Form dekorativer Durchgänge, bspw. in Form schlitzartiger Öffnungen, auf. Bei entsprechender Positionierung des Ventilators wird von außerhalb des Gehäuses Luft angesaugt und in den Lufteinlass bzw. in das Lufteinlassrohr bis in die Holzkohlekammer hinein geblasen. Der Lufteinlass kann Teil bzw. integrierter Bestandteil eines Ventilatorgehäuses sein.

Auch ist es denkbar, dass das Gehäuse im Bereich oberhalb des Innenbodens zur Kühlung im Bereich zwischen dem Gehäuse und der Trägerschale dienende Öffnungen, vorzugsweise in Form dekorativer Durchgänge bzw. Schlitze über den gesamten Umfang des Gehäuses hinweg aufweist, so dass die Außenwandung des Gehäuses weitestgehend von der Holzkohlekammer temperaturentkoppelt ist, nämlich einerseits aufgrund der Zwischenschaltung der von innen wärmereflektierenden Trägerschale und andererseits aufgrund des Luftraums zwischen der Trägerschale und dem Gehäuse. Auch ist es denkbar, dass der Innenboden gelocht, geschlitzt oder sonstwie durchgängig ausgeführt ist, so dass über den Ventilator auch Luft in den Bereich zwischen der Trägerschale und dem Gehäuse gesaugt oder geblasen werden kann, und von dem Zwischenraum aus in den Bereich unter den Innenboden und von dort aus durch das Lufteinlassrohr in die Holzkohlekammer gelangen kann. Auch diese Maßnahme begünstigt die Kühlung und somit eine unerwünschte Wärmeübertragung auf das Gehäuse.

In Bezug auf den Rost, insbesondere in Bezug auf dessen sichere Positionierung, ist es von Vorteil, wenn dieser zum Einstecken in Öffnungen im oberen Rand der Trägerschale oder im Gehäuse dienende Steckfüße aufweist, so dass eine feste Anbringung des Rosts am Gehäuse möglich ist. Der Rost selbst kann in seinem Randbereich, zumindest geringfügig oberhalb der eigentlichen Auflagefläche, eine umlaufende Reling aufweisen, wobei durch diese Maßnahme ein Herunterfallen von Grillgut wirksam verhindert ist. Eine weitere Sicherheitsmaßnahme ist so geschaffen.

In Bezug auf die Festlegung des Rosts ist es von Vorteil, wenn dieser klemmend am Gehäusrand festlegbar ist, vorzugsweise mittels Spannmitteln, die vorzugsweise aus Metall ausgeführt sind. Bei den Spannmitteln kann es sich um Spannklammern oder dgl. handeln, wodurch ein sicheres Festlegen des Rosts möglich ist. Wie bereits zuvor ausgeführt, übt beim Festspannen des Rosts dieser eine klemmende Wirkung auf den Deckel der Holzkohlekammer aus, so dass die Holzkohlekammer wirksam zwischen der Trägerschale und dem Rost festgelegt ist.

In weiter vorteilhafter Weise weist der Rost eine mittige geschlossene, vorzugsweise gewellte Fläche auf. Diese Fläche kann wiederum einen nach außen abfallenden Tropfrand oder zumindest eine Tropfnase aufweisen, der bzw. die im Durchmesser zumindest geringfügig größer ist als der Durchmesser der Holzkohlekammer. Letztendlich überragt die geschlossene Fläche bei mittiger Anordnung auf bzw. im Rost die darunter ebenfalls mittig angeordnete Holzkohlekammer, so dass durch diese Maßnahme ein Auftropfen von Wasser oder Fett auf den Deckel der Holzkohlekammer zumindest weitestgehend vermieden ist. Tropfendes Wasser oder Fett fällt somit seitlich neben die Holzkohlekammer und kann in der Trägerschale zusammenlaufen.

Zur Begünstigung des Sammelns tropfenden Wassers oder Fetts ist die Trägerschale vorzugsweise mit einem zumindest teilweise umlaufenden Randbereich in das Gehäuse eingehängt, wobei der Bodenbereich der Trägerschale zu einem äußeren Randbereich abfällt und dort einen Sammelbereich für tropfendes Wasser oder Fett bildet. Bei der Ausgestaltung der Trägerschale aus Edelstahl lässt sich die Trägerschale einfach aus dem Gehäuse entnehmen und kann in einer Spülmaschine gereinigt werden, wie auch die anderen Bestandteile des Kochers.

Auch das Gehäuse kann im Wesentlichen aus Metall bestehen, wobei der Bodenbereich unterhalb des Innenbodens ohne Weiteres auch aus Kunststoff hergestellt sein kann. Beide Bereiche können miteinander verpresst, verschraubt, verklebt oder sonstwie miteinander verbunden sein.

Auch ist es denkbar, das metallische Gehäuse zumindest außen durch Pulverbeschichtung bzw. Pulverlackierung zu veredeln. Beliebige Farbgebungen sind denkbar.

Weiter ist es von Vorteil, die Trägerschale und/oder die Holzkohlekammer (insgesamt) und/oder die Anzündschale und/oder den Grillrost aus Edelstahl herzustellen, nämlich zur Realisierung einer Langlebigkeit und zum Zwecke der einfachen Reinigung, möglichst in einer Geschirrspülmaschine.

Der nebengeordnete Anspruch 15 betrifft eine Holzkohlekammer, die die Holzkohlekammer betreffenden Merkmale des Anspruchs 1 und ggf. der Ansprüche 2 bis 14 umfasst. Der weiter nebengeordnete Anspruch 16 betrifft die Verwendung des Kochers als Grill, insbesondere als Tischgrill. Ausführungen dazu erübrigen sich an dieser Stelle unter Hinweis auf die Ausführungen zum Kocher, der eine entsprechende Holzkohlekammer aufweist. Der nebengeordnete Anspruch 16 betrifft einen Grill, mit den Merkmalen des Kochers.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Sprengdarstellung die wesentlichen "äußeren" Bestandteile des erfindungsgemäßen Kochers,
- Fig. 2: in einer schematischen Sprengdarstellung die wesentlichen "inneren" Bestandteile des erfindungsgemäßen Kochers,
- Fig. 3: in einer schematischen Seitenansicht, geschnitten und teilweise weggebrochen, den erfindungsgemäßen Kocher mit den wesentlichen Bestandteilen im zusammengebauten Zustand,
- Fig. 4: in einer schematischen Seitenansicht, geschnitten, die grundsätzliche Konstruktion der Holzkohlekammer des erfindungsgemäßen Kochers,
- Fig. 5: in einer schematischen Ansicht, Draufsicht und Seitenansicht ein Ausführungsbeispiel des Deckels zum Verschließen der Holzkohlekammer nach Fig. 4,
- Fig. 6: ein erstes Ausführungsbeispiel der erfindungsgemäßen Holzkohlekammer, gefertigt aus einem Lochblech mit runder Lochung, Deckel angehoben,
- Fig. 7: das Ausführungsbeispiel der erfindungsgemäßen Holzkohlekammer nach Fig. 6, Deckel aufgesetzt,
- Fig. 8: ein zweites Ausführungsbeispiel der erfindungsgemäßen Holzkohlekammer, gefertigt aus einem Lochblech mit quadratischer Lochung, Deckel angehoben,
- Fig. 9: das Ausführungsbeispiel der erfindungsgemäßen Holzkohlekammer nach Fig. 8, Deckel aufgesetzt,
- Fig. 10: ein drittes Ausführungsbeispiel der erfindungsgemäßen Holzkohlekammer, gefertigt aus einem Lochblech mit länglicher Lochung, Deckel angehoben,
- Fig. 11: das Ausführungsbeispiel der erfindungsgemäßen Holzkohlekammer nach Fig. 10, Deckel aufgesetzt,
- Fig. 12: in einer schematischen Draufsicht ein weiteres Ausführungsbeispiel einer erfindungsgemäßen Holzkohlekammer, bei der die zueinander versetzten Wandelemente die umlaufende Wand mit seitlicher Schlitzung bilden und
- Fig. 13-15: in schematischen Ansichten ein weiteres Ausführungsbeispiel eines erfindungsgemäßen Kochers, unter Verwendung einer erfindungsgemäßen Holzkohlekammer, wobei der Kocher auch als Grill, insbesondere als Tischgrill, verwendbar ist.

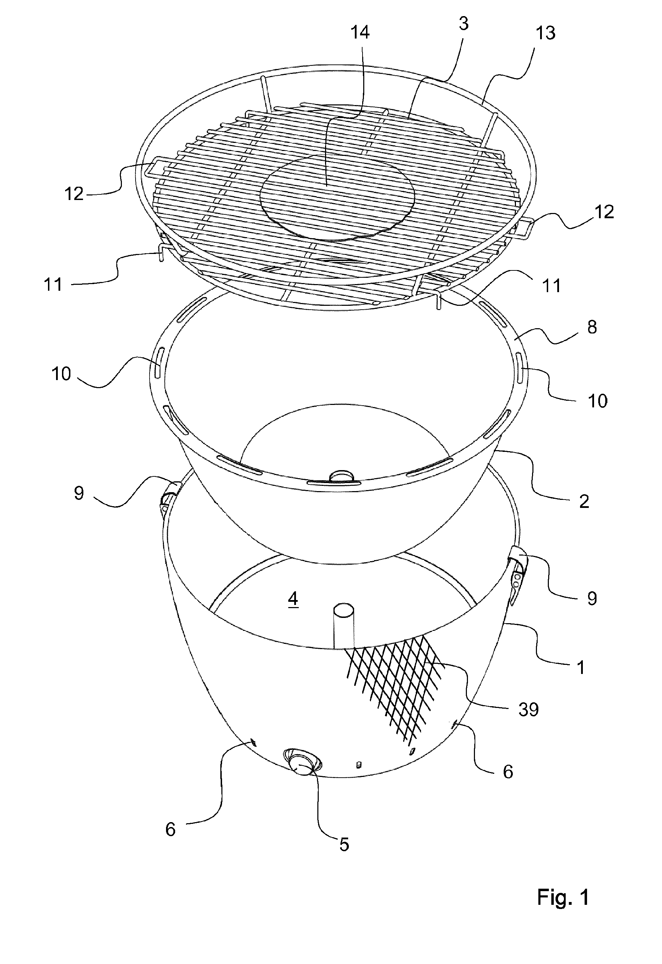

Fig. 1 zeigt in einer schematischen Sprengdarstellung die "äußeren" Bestandteile des erfindungsgemäßen Kochers, nämlich, von unten beginnend, das Gehäuse 1, die in das Gehäuse 1 einsetzbare Trägerschale 2 und den darüber anordenbaren Rost 3.

Des Weiteren lässt Fig. 1 erkennen, dass das Gehäuse 1 im unteren Bereich einen Innenboden 4 im Sinne eines Zwischenbodens aufweist, unter dem elektrische Komponenten angeordnet sind. Von außerhalb des Gehäuses 1 ist ein Drehknopf 5 erkennbar, der zum Ein- und Ausschalten sowie zur Regulierung eines unter dem Innenboden 4 angeordneten Gebläses dient.

In der Wandung des Gehäuses 1 sind untere Durchgänge 6 vorgesehen, die zum Ansaugen von Außenluft dienen. Obere Durchgänge 7 dienen zur Hinterlüftung des Raums zwischen der Trägerschale 2 und dem Gehäuse 1.

Die Trägerschale 2 wird mit ihrem Randbereich 8 auf den freien Rand des Gehäuses 1 aufgesetzt und dort mittels Spannvorrichtung 9, die am Rost 3 angreifen, festgelegt. Letztendlich handelt es sich bei der Spannvorrichtung 9 um beidseitig angreifende Klammern, die den Rost 3 und somit auch die Trägerschale 2 fest mit dem Gehäuse 1 verbinden.

Im Randbereich 8 der Trägerschale 2 sind Ausnehmungen 10 vorgesehen, die zum positionierenden Einstecken von Füßen 11 des Rosts 3 dienen. Durch diese Maßnahme lässt sich der Rost 3 in idealer Weise positionieren, wobei die Spannvorrichtungen 9 bzw. die dort vorgesehenen Spannklammern in seitliche Befestigungslaschen 12 am Rost 3 greifen. Durch Spannen der Spannvorrichtungen 9 wird der Rost 3 fest mit dem Gehäuse 1 verbunden, und zwar unter Zwischenschaltung der Trägerschale 2, die dabei gleichermaßen fixiert wird. In der zusammengebauten Position ist zwischen dem Gehäuse 1 und der Trägerschale 2 ein wärmeisolierender Luftraum geschaffen, der über die oberen Durchgänge 7 hinterlüftet ist.

Der Rost 3 umfasst eine umlaufende Reling 13 und ist mittig mit einer geschlossenen, gewellten Grillfläche 14 versehen, deren Randbereich zum Abtropfen von Wasser oder Fett zumindest geringfügig nach unten abfallend ausgebildet sein kann.

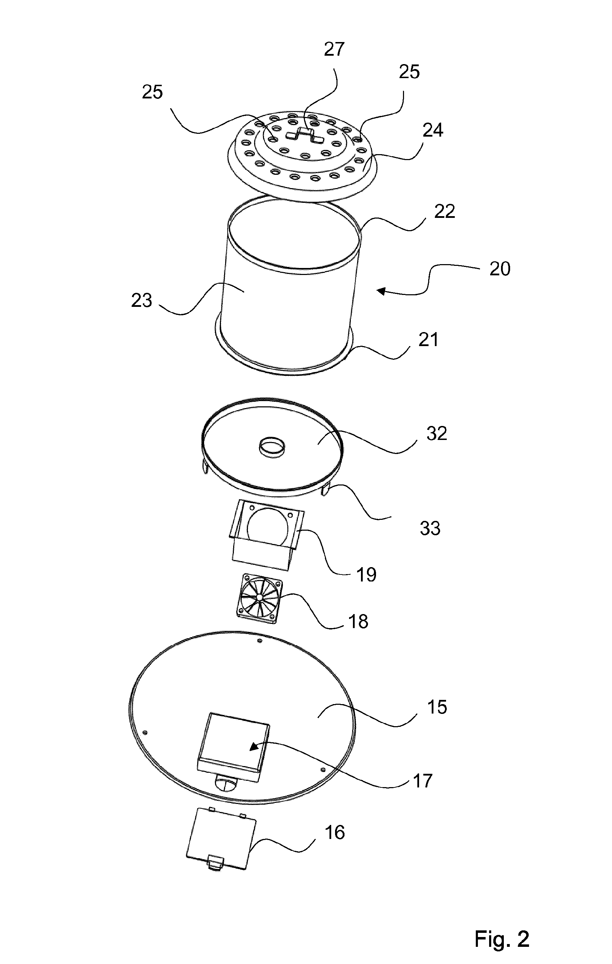

Fig. 2 zeigt in einer schematischen Sprengdarstellung die wesentlichen "inneren" Bestandteile des erfindungsgemäßen Kochers, nämlich, von unten beginnend, einen das Gehäuse 1 nach unten abschließenden Boden 15, der mit einer Öffnungsklappe 16 zum Einstecken und Herausnehmen von Batterien 17 ausgestattet ist. Die Batterien 17 dienen zur Stromversorgung eines Ventilators 18, der in einem Ventilatorgehäuse 19 angeordnet ist.

Des Weiteren zeigt Fig. 2 die erfindungsgemäß innerhalb des Kochers vorgesehene Holzkohlekammer 20, die einen unteren abgeflanschten Randbereich 21 und einen oberen verstärkten Randbereich 22 hat. Dazwischen erstreckt sich eine besondere Wandung 23, die als feinmaschiges Sieb aus Edelstahl ausgeführt ist.

Die Holzkohlekammer 20 ist mit einem Deckel 24 ausgestattet, der zwei planparallele Flächen mit unterschiedlichem axialen Abstand zum Deckelrand aufweist. In den Flächen sind Lochgruppen 25 konzentrisch zueinander ausgebildet. Außerdem ist der Deckel 24 mit schrägen bzw. abfallenden Flächen im Übergang zwischen den die Lochgruppen 25 umfassenden Flächen und im Randbereich ausgestattet, die zum Ablaufen bzw. Abtropfen von Fett dienen.

Des Weiteren ist der Deckel 24 mit einem Henkel 27 ausgestattet, der im zusammengebauten Zustand des Kochers als Klemmbügel dient, nämlich zum klemmenden Festlegen der geschlossenen Holzkohlekammer 20 zwischen dem Bodenbereich der Trägerschale 2 und dem Rost 3.

Auf die Anzündschale wird später eingegangen werden.

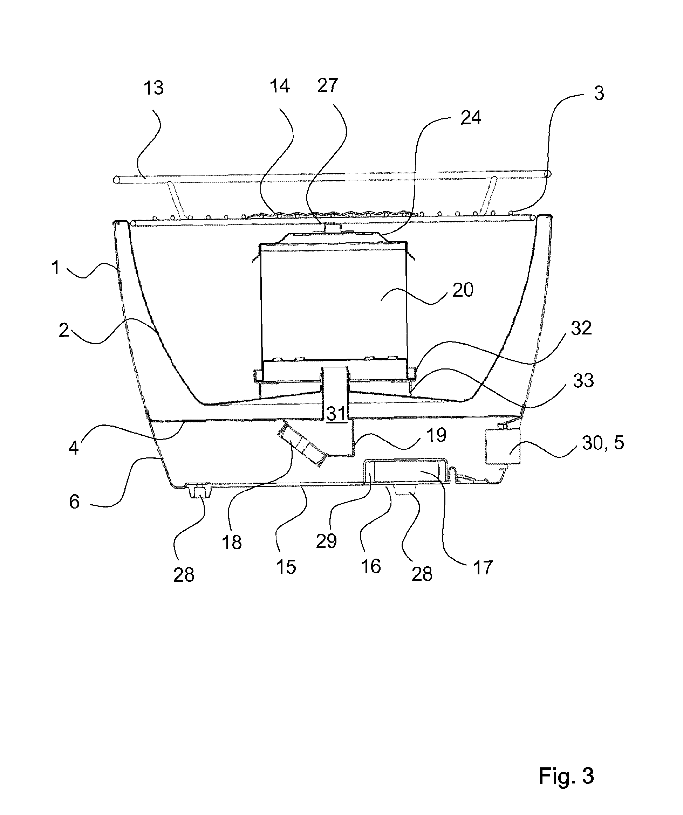

Fig. 3 zeigt den erfindungsgemäßen Kocher in einer zusammengebauten Ansicht, im Schnitt, mit darin angeordneter Holzkohlekamer 20.

Von unten beginnend ist das Gehäuse 1 durch den Boden 15 geschlossen, wobei zum Positionieren des Gehäuses 1 bzw. des Grills Füße 28 vorgesehen sind. Der Boden 15 ist verschraubt oder verrastet, lässt sich jedenfalls vom Gehäuse 1 entfernen bzw. abnehmen.

Im Boden 15 ist die Öffnungsklappe 16 vorgesehen, über die ein Batteriefach 29 öffenbar ist. Im Batteriefach 29 befinden sich die Batterien 17.

Die Stromversorgung des Ventilators 18 erfolgt über die Batterien 17, wobei ein Schalter bzw. Regler 30 zwischengeschaltet ist, der den als Schalter dienenden Drehknopf 5 umfasst. Grundsätzlich ist die Drehzahl des Ventilators 18 manuell einstellbar.

Fig. 3 zeigt des Weiteren, dass der Ventilator 18 innerhalb eines Ventilatorgehäuses 19 angeordnet ist, wodurch durch untere Durchgänge 6 in das Gehäuse 1 einströmende Luft in ein Lufteinlassrohr 31 geleitet wird. Das Lufteinlassrohr 31 bzw. der so gebildete Lufteinlass erstreckt sich durch den Innenboden 4 hindurch, durch einen mittigen Durchgang in der Trägerschale 2 in einen Raum unterhalb der Holzkohlekammer 20, die in einer Anzündschale 32 steht, nämlich mit angeformten Füßen 33 auf dem Bodenbereich der Trägerschale 2. Angesaugte bzw. durch das Lufteinlassrohr 31 geblasene Luft dient zur Brennluftversorgung einer in der Anzündschale 32 befindlichen Anzündhilfe, vorzugsweise aus pastösem Material. Entsprechend wird die in der Holzkohlekammer 20 befindliche Holzkohle vermittels der Hitzeentwicklung in der Anzündschale 32 entzündet, begünstigt durch die Luftzufuhr, so dass ein schnelles Entfachen der darüber befindlichen Holzkohle realisierbar ist.

Die Holzkohlekammer 20 ist entsprechend der Darstellung in Fig. 3 mit dem Deckel 24 geschlossen, der im Sinne eines Stülpverschlusses auf der Holzkohlekammer 20 sitzt. Über den federnd wirkenden Henkel 27 ist die Holzkohlekammer 20 zwischen der Trägerschale 2 und dem Rost 3 festgelegt, so dass in zusammengebautem Zustand eine sichere Anordnung der Holzkohlekammer 20, im verschlossenen Zustand, gewährleistet ist.

Als oberer Abschluss ist der Rost 3 mit umlaufender Reling 13 angeordnet, wobei der Rost 3 im mittigen Bereich eine geschlossene Grillfläche 14 aufweist.

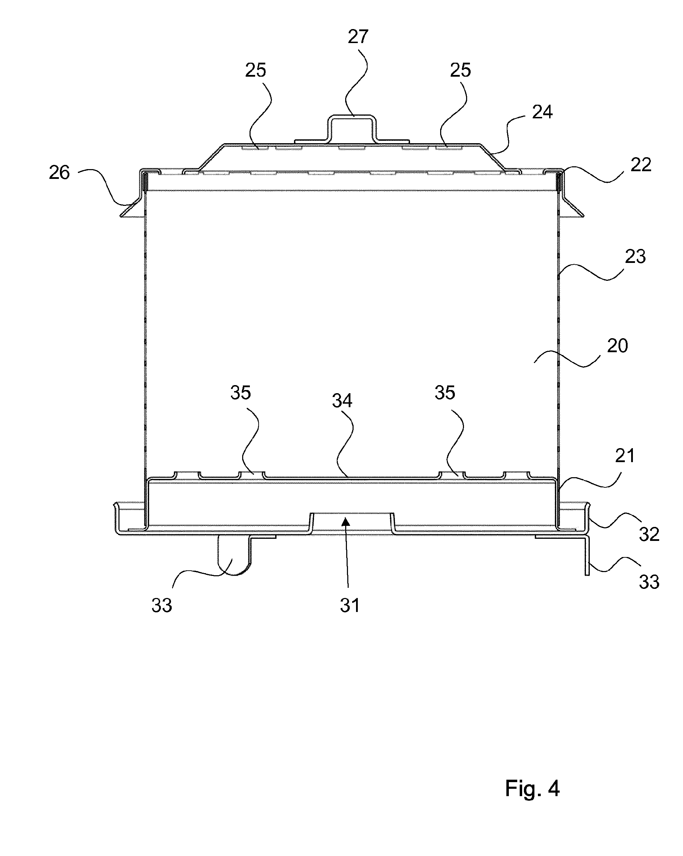

Fig. 4 zeigt die Holzkohlekammer 20 im Detail, wonach diese einen geflanschten unteren Randbereich 21 mit gelochtem Boden 34 aufweist. Durchgänge bzw. Lochgruppen 35 sind im Boden 34 ausgebildet. Die Durchgänge bzw. Lochgruppen 35 im Boden 34 dienen zum besseren Anfeuern der Holzkohle von unten, d.h. zum Anfeuern über die Anzündhilfe, die sich im zusammengebauten Zustand darunter in der Anzündschale 32 (vgl. Fig. 3) befindet.

Die Wandung 23 der Holzkohlekammer 20 weist Durchgänge auf, die später erörtert werden. Nach oben hin ist die Wandung 23 durch einen metallverstärkten, vorzugsweise umbörtelten Randbereich 22 abgeschlossen.

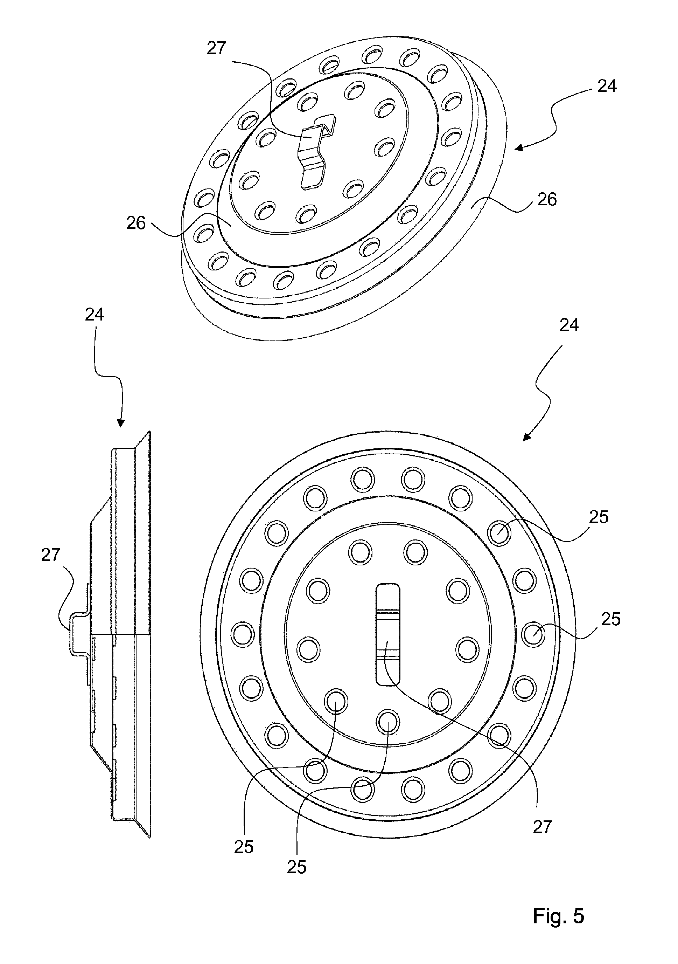

Fig. 5 zeigt den Deckel 24, mit dem die Holzkohlekammer 20 im Sinne eines Stülpverschlusses verschließbar ist. Die Lochgruppen 25 sind unterschiedlichen Flächen des Deckels 24 zugeordnet, wobei zwischen den Flächen eine abfallende Fläche sowie ein äußerer abfallenden Rand 26 vorgesehen sind. Der mittige Henkel 27 dient einerseits zur Handhabung und andererseits zum Verspannen gegenüber dem Grillrost 3. Auch der Deckel 24 ist vorzugsweise aus Edelstahl hergestellt.

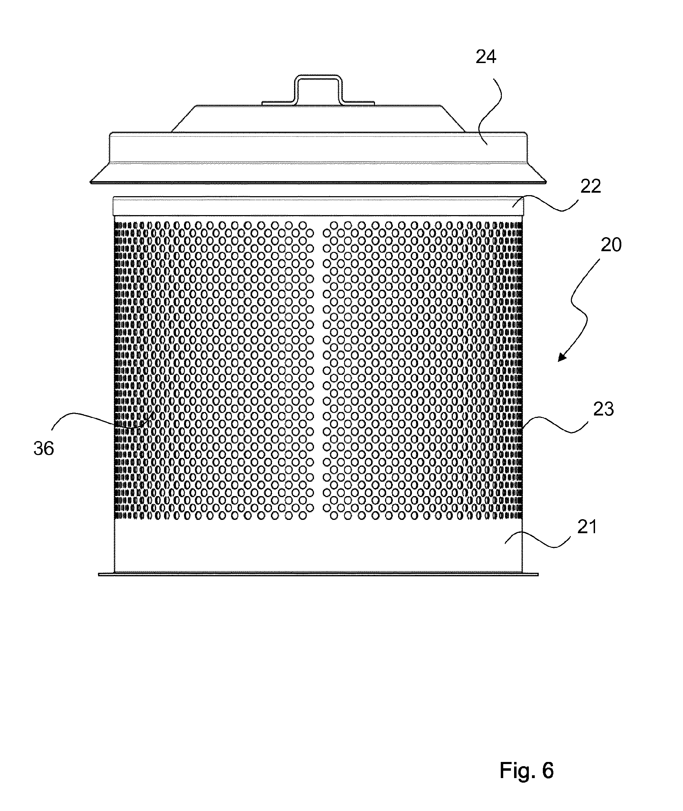

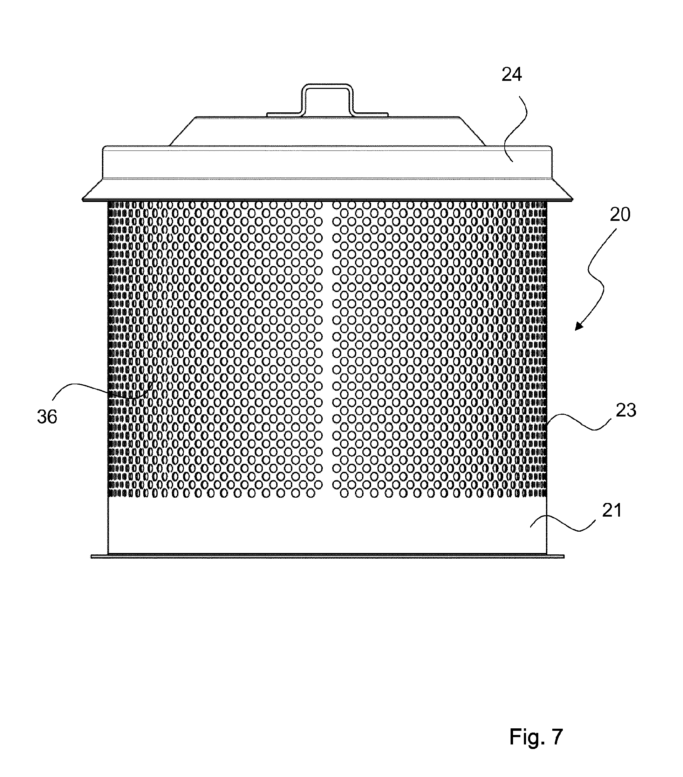

Fig. 6 und 7 zeigen ein erstes Ausführungsbeispiel einer erfindungsgemäßen Holzkohlekammer 20, bei der die Wand 23 aus einem gestanzten Lochblech mit runder Lochung 36 hergestellt ist. Der untere Randbereich 21 ist ohne Lochung und trägt somit zur Stabilität der Holzkohlekammer 20 bei. Der obere Randbereich 22 ist durch eine Falzung verstärkt. Auch dieser Randbereich 22 trägt zur Stabilität der Holzkohlekammer 20 bei.

Während bei der Darstellung in Fig. 6 der Deckel 24 angehoben ist, sitzt er gemäß Darstellung nach Fig. 7 auf der Holzkohlekammer 20 auf. Neben einer einfachen Stülpverbindung kann eine Rastverbindung, ein Bajonettverschluss, etc. zum sicheren Abschluss der Holzkohlekammer 20 vorgesehen sein.

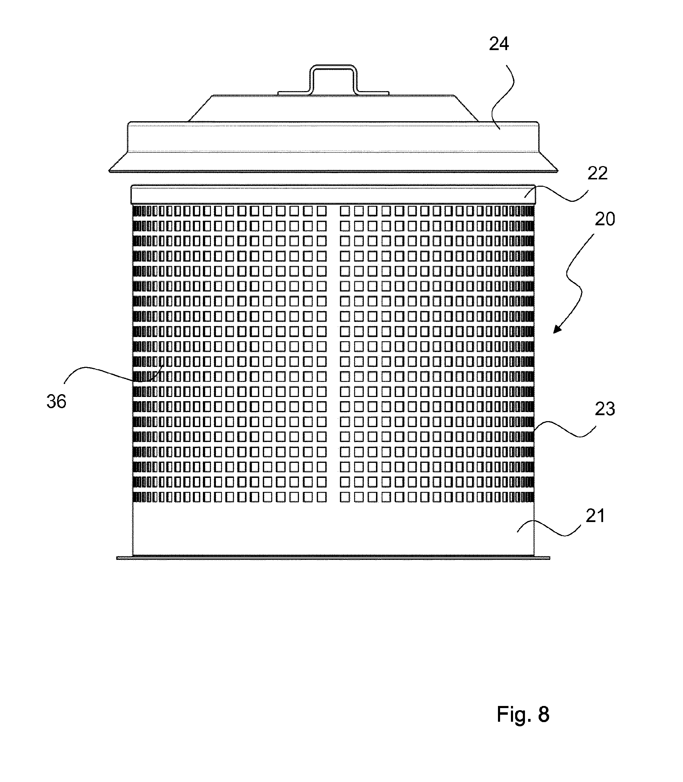

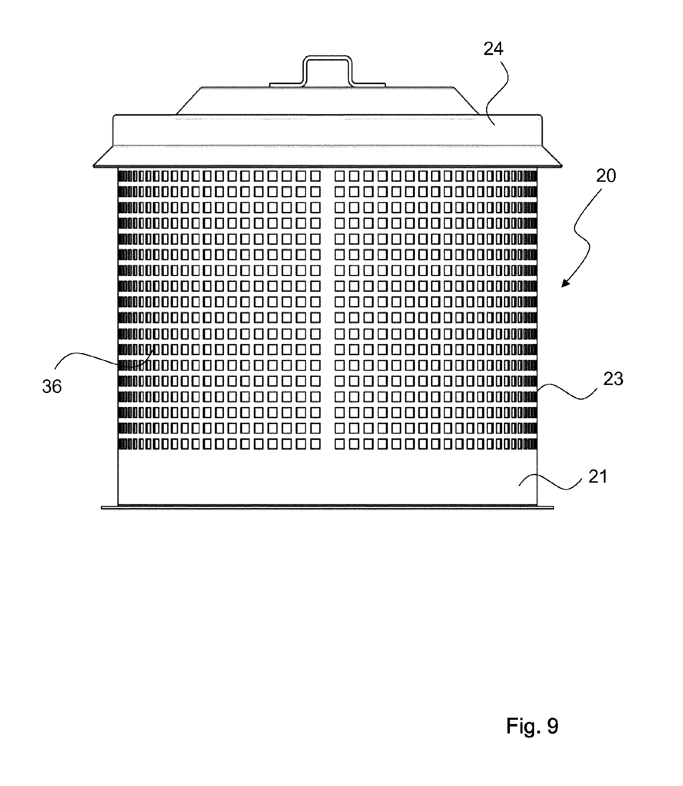

Die Fig. 8 und 9 zeigen ein weiteres Ausführungsbeispiel der erfindungsgemäßen Holzkohlekammer 20, wobei dort eine quadratische Lochung 36 in der Wand 23 der Holzkohlekammer 20 vorgesehen ist. Ansonsten entspricht dieses Ausführungsbeispiel dem Ausführungsbeispiel aus den Fig. 6 und 7.

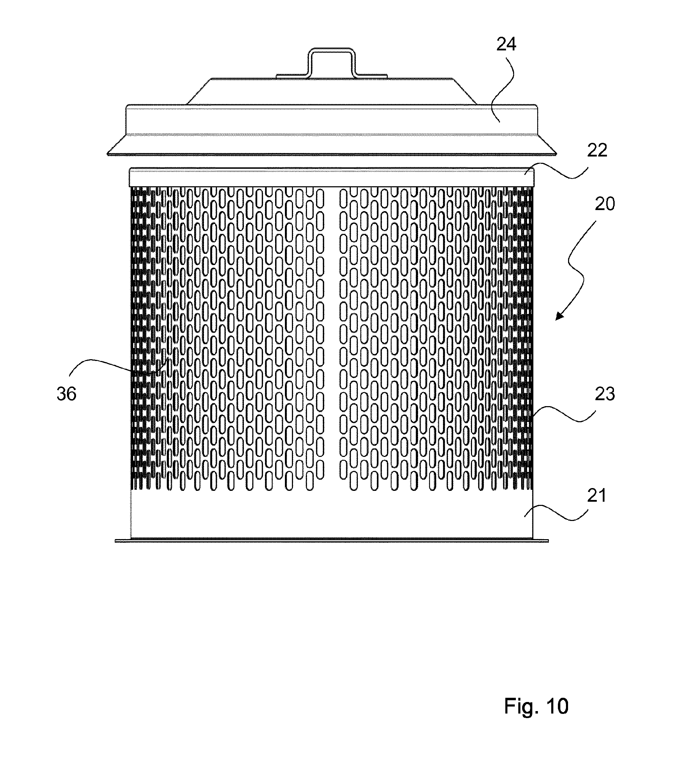

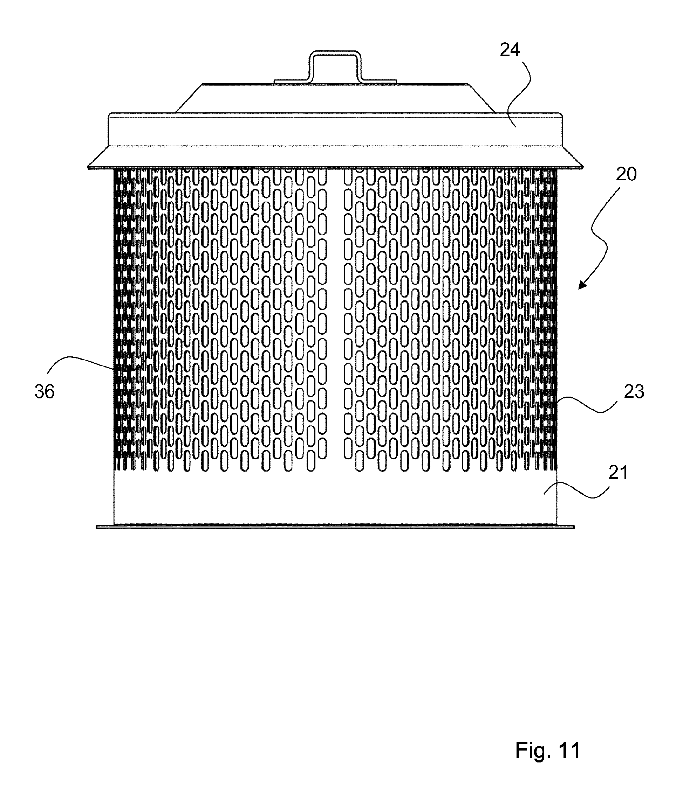

Gemäß dem in den Fig. 10 und 11 gezeigten weiteren Ausführungsbeispiel einer Holzkohlekammer 20 ist die Lochung 36 länglich, genauer gesagt in Form länglicher Schlitze, ausgeführt. Eine elliptische Ausgestaltung könnte entsprechend vorgesehen sein.

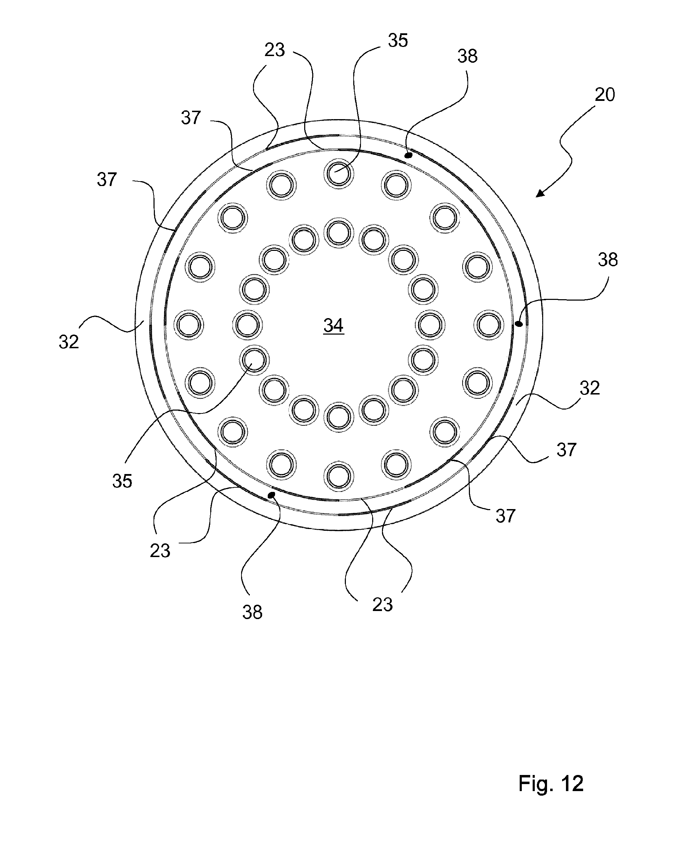

Fig. 12 zeigt in einer schematischen Draufsicht ein weiteres, besonderes Ausführungsbeispiel einer erfindungsgemäßen Holzkohlekammer 20, wobei diese Darstellung, von oben betrachtet, den Boden 34 der Holzkohlekammer 20 und die dortige Lochgruppe 35 erkennen lässt.

Die Wand 23 besteht aus zueinander versetzten Wandelementen 37, die aufgrund ihres Versatzes vertikale Spalte 38 zur Begünstigung der Wärmeabstrahlung bilden. Die Spalten 38 sind derart ausgelegt, dass weder Glut noch Funkenflug nach außen gelangen.

In Fig. 12 ist angedeutet, dass die die Wand 23 bildenden Wandelemente 37 in der Anzündschale 32 stehen, wobei die Wandelemente 37 aus ineinander angeordneten Edelstahlröhren mit entsprechenden Ausklinkungen bzw. Ausnehmungen hergestellt sein können. Wesentlich ist jedenfalls, dass die Wandelemente 37 einander überlappend ergänzen und dadurch den Spalt 38, jeweils zwischen den Wandelementen 37, bilden.

An dieser Stelle sei angemerkt, dass ein in den Figuren nicht gezeigtes Inlet vorgesehen sein kann, welches aus einem engmaschigen Stahlnetz oder Sieb bestehen kann, um nämlich die Glut weiterreichend im Inneren der Holzkohlekammer 20 zu halten.

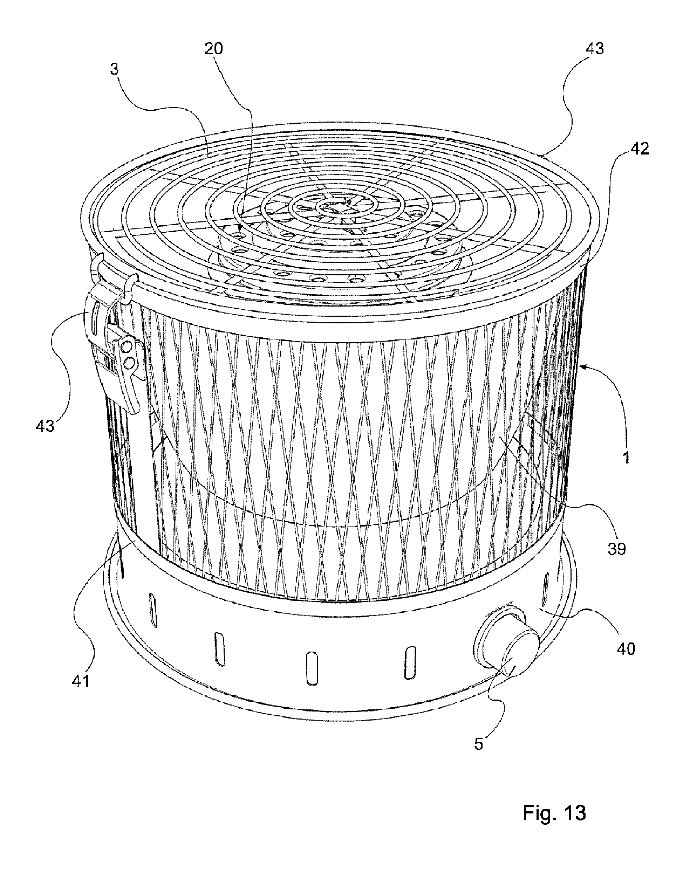

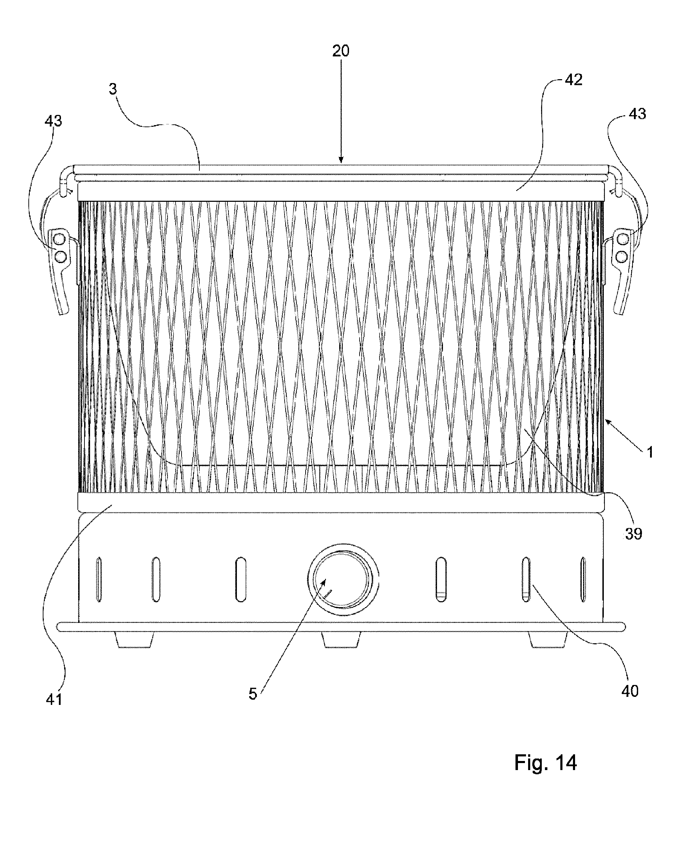

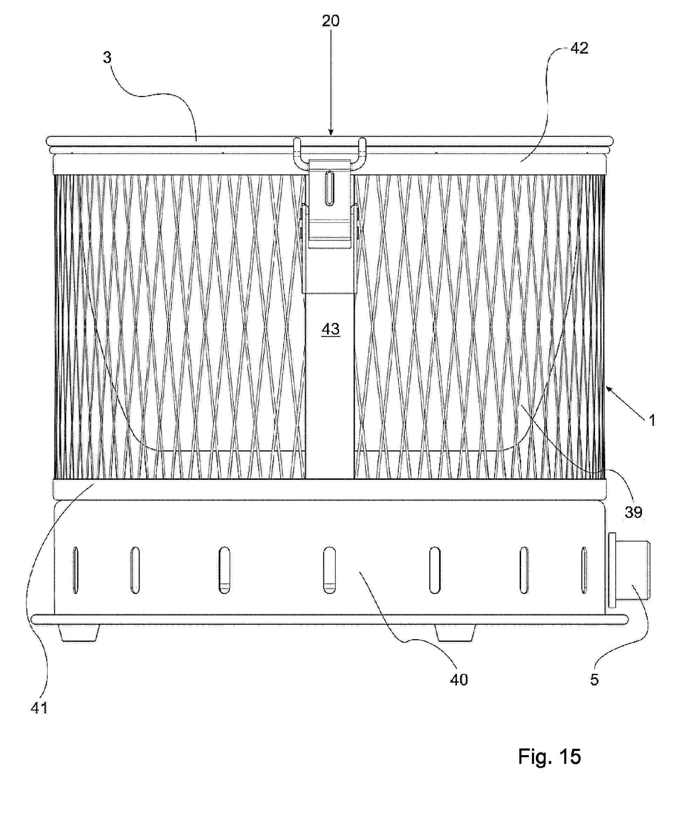

Die Fig. 13, 14 und 15 zeigen ein weiteres Ausführungsbeispiel eines erfindungsgemäßen Kochers, wobei dort die gleiche Holzkohlekammer wie bei dem ersten Ausführungsbeispiel vorgesehen ist. Außerdem lässt sich der in Fig. 13, 14 und 15 gezeigte Kocher in idealer Weise als Grill verwenden, wobei der oberseitige Rost 3 als Grillrost ausgeführt ist und mit oder ohne Reling 13 ausgeführt sein kann.

Bei dem Ausführungsbeispiel aus den Fig. 13, 14 und 15 ist wesentlich, dass das Gehäuse 1 eine Wandung aus Streckgitter 39 aufweist. Außerdem ist das Gehäuse 1 zylinderförmig ausgebildet.

Das Gehäuse 1 sitzt auf einem Sockel 40, der die wesentlichen Bestandteile der Luftversorgungseinrichtung umfasst.

Die Fig. 13, 14 und 15 zeigen den aus dem Sockel 40 herausragenden Drehknopf 5, der als Schalter dient. Auch der Sockel 40 ist im Wesentlichen zylinderförmig ausgebildet.

Des Weiteren lassen die Fig. 13, 14 und 15 erkennen, dass das Streckgitter 39 einen unteren Rand 41 und einen oberen Rand 42 aufweist, wodurch das Streckgitter 39 begrenzt ist. Der untere Rand 41 kann im Sinne einer Aufnahme zum Hineinstellen des zylinderförmigen Streckgitters 39 dienen.

Die Fig. zeigen des Weiteren, dass zwei gegenüberliegende Klammer-/Spanneinrichtungen 43 vorgesehen sind, die den Sockel 40, das Gehäuse 1 bzw. das Streckgitter 39 (als Wand des Gehäuses 1) und den Rost 3 fest miteinander verbinden, so dass die gesamte Anordnung auch beim Umfallen nicht außer Angriff gelangt. Die im Gehäuse 1 befindliche Holzkohlekammer 20 ist im Gehäuse 1 verspannt und ist dadurch sicher positioniert.

Im Bezug auf das "Innenleben" des in Fig. 13, 14 und 15 gezeigten Ausführungsbeispiels sei zur Vermeidung von Wiederholungen auf die vorangegangene Figurenbeschreibung verwiesen.

Hinsichtlich weiterer vorteilhafter Ausgestaltungen des erfindungsgemäßen Kochers wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele des erfindungsgemäßen Kochers lediglich zur Erörterung der beanspruchten Lehre dienen, diese jedoch nicht auf die Ausführungsbeispiele einschränken.

### Bezugszeichenliste

- 1: Gehäuse
- 2: Trägerschale
- 3: Grillrost, Rost
- 4: Innenboden (des Gehäuses)
- 5: Drehknopf (des Schalters/Reglers)
- 6: Unterer Durchgang (in der Wandung des Gehäuses)
- 7: oberer Durchgang (in der Wandung des Gehäuses)
- 8: Randbereich (der Trägerschale)
- 9: Spannvorrichtung (zum Verspannen des Grillrosts am Gehäuse)
- 10: Ausnehmung im oberen Randbereich der Trägerschale zum Einstecken von Füßen des Grillrosts
- 11: Fuß am Grillrost
- 12: Befestigungslasche am Grillrost
- 13: Reling am Grillrost
- 14: Grillfläche, mittig auf dem Grillrost
- 15: Boden (unterer Boden des Gehäuses)
- 16: Öffnungsklappe im Boden des Gehäuses
- 17: Batterien im Batteriefach
- 18: Ventilator
- 19: Ventilatorgehäuse
- 20: Holzkohlekammer
- 21: geflanschter unterer Randbereich der Holzkohlekammer
- 22: oberer verstärkter Randbereich der Holzkohlekammer
- 23: Wandung der Holzkohlekammer, Wand
- 24: Deckel der Holzkohlekammer
- 25: Lochgruppe im Deckel
- 26: abfallende, schräge Fläche am Deckel
- 27: Henkel am Deckel
- 28: Fuß des Gehäuses
- 29: Batteriefach im Boden des Gehäuses
- 30: Regler
- 31: Lufteinlassrohr
- 32: Anzündschale
- 33: Fuß der Anzündschale
- 34: Boden der Holzkohlekammer
- 35: Lochgruppe im Boden der Holzkohlekammer
- 36: Lochung in der Wand der Holzkohlekammer
- 37: Wandelement (zur Bildung der Wand)
- 38: Spalt (zwischen den Wandelementen)
- 39: Streckgitter, Gitter
- 40: Sockel
- 41: unterer Rand (des Streckgitters), Randbereich
- 42: oberer Rand (des Streckgitters), Randbereich
- 43: Klammer-/Spanneinrichtung

## Patentansprüche

1. Tragbarer Kocher mit einem Gehäuse (1), einer innerhalb des Gehäuses (1) allseitig mit Abstand zum Gehäuse (1) angeordneten Trägerschale (2), einer in der Trägerschale (2) stehenden, im wesentlichen zylindrischen Holzkohlekammer (20) mit Deckel (24), einem oberhalb der Holzkohlekammer (20) angeordneten Rost und einer Luftversorgungseinrichtung, die von unterhalb der Trägerschale (2) einen in die Holzkohlekammer (20) gerichteten Luftstrom erzeugt,
**dadurch gekennzeichnet, dass** das Gehäuse (1) zumindest im Bereich um die Holzkohlekammer (20) herum, mit Abstand zu der Trägerschale (2), als gelochtes Gitter oder als Streckgitter (39) ausgeführt ist.

2. Kocher nach Anspruch 1, **dadurch gekennzeichnet, dass** das Gehäuse (1) durch einen oberen und einen unteren Randbereich (41, 42), vorzugsweise aus Vollmaterial, stabilisiert bzw. gefasst ist.

3. Kocher nach Anspruch 1 oder 2, **dadurch gekennzeichnet, dass** das Gitter (39) aus Edelstahl gefertigt ist.

4. Kocher nach einem der Ansprüche 1 bis 3, **dadurch gekennzeichnet, dass** das Gehäuse (1) abnehmbar auf einem Sockel (40) sitzt, wobei der Sockel (40) zumindest Teile der Luftversorgungseinrichtung umfasst.

5. Kocher nach einem der Ansprüche 1 bis 4, **dadurch gekennzeichnet, dass** das Gehäuse (1) und gegebenenfalls der Sockel (40) zylindrisch ausgeführt sind und vorzugsweise den gleichen Durchmesser haben.

6. Kocher nach einem der Ansprüche 1 bis 5, **dadurch gekennzeichnet, dass** seitlich des Gehäuses (1), vorzugsweise einander gegenüberliegend, ein Klammer-/Spannsystem (43) zum Halten und Verspannen des Rosts (3) und gegebenenfalls der Anordnung von Sockel (40), Gehäuse (1) und Rost (3), vorgesehen ist.

7. Kocher nach einem der Ansprüche 1 bis 6, **dadurch gekennzeichnet, dass** die zylindrische Wand (23) der Holzkohlekammer (20) aus einem Edelstahlblech gefertigt ist und dass das Edelstahlblech geschlitzt, gelocht oder gestreckt ist.

8. Kocher nach Anspruch 7, **dadurch gekennzeichnet, dass** die Wand (23) axial verlaufende, parallel zueinander ausgebildete Schlitze aufweist, die sich zwischen einem durchgehenden bodenseitigen Rand und einem durchgehenden deckelseitigen Rand erstrecken oder dass die Wand aus radial zueinander versetzten Wandelementen (37) besteht, die einander zumindest geringfügig überlappen und jeweils zwischen sich einen axial verlaufenden Schlitz bilden, wobei die Schlitze eine Breite im Bereich von 1 bis 3 mm haben.

9. Kocher nach Anspruch 7, **dadurch gekennzeichnet, dass** die Wand (23) als Streckgitter oder als Lochblech ausgeführt ist, wobei das Lochblech eine runde Lochung (36) oder eine ovale bzw. elliptische oder längliche Lochung (36) hat oder eine rechteckige, vorzugsweise eine quadratische Lochung (36) hat.

10. Kocher nach Anspruch 9, **dadurch gekennzeichnet, dass** die Lochungen (36) benachbarter Lochreihen auf einer horizontalen Linie liegen oder versetzt zueinander angeordnet sind.

11. Kocher nach Anspruch 9 oder 10, **dadurch gekennzeichnet, dass** die Löcher einen Durchmesser im Bereich von 1 bis 3 mm, vorzugsweise im Bereich von 2 mm, haben.

12. Kocher nach einem der Ansprüche 7 bis 11, **dadurch gekennzeichnet, dass** die Schlitze oder Lochungen (36) vorzugsweise stanztechnisch hergestellt sind und dass nach innen gerichtete Stülpungen der Ränder ausgebildet sind.

13. Kocher nach einem der Ansprüche 7 bis 12, **dadurch gekennzeichnet, dass** der Deckel (24) in seiner Fläche gelocht ist.

14. Kocher nach einem der Ansprüche 7 bis 13, **dadurch gekennzeichnet, dass** innerhalb der Holzkohlekammer (20) ein siebartiges Inlet aus feinmaschigem Edelstahl angeordnet ist, welches mit zumindest geringem Spiel zu der Innenwandung der Holzkohlekammer (20) innerhalb dieser in der Trägerschale (2) steht und/oder mit der Holzkohlekammer (20) verbunden ist.
